# EUROPÄISCHE PATENTSCHRIFT

(11) **EP 2 777 309 B1**
(45) Veröffentlichungstag und Bekanntmachung des Hinweises auf die Patenterteilung: **03.05.2017**
(21) Anmeldenummer: 12786812.3
(22) Anmeldetag: 19.10.2012
(51) Int. Cl.: H04W 12/04, H04W 12/06, H04W 4/00, G07C 5/00

(54) **VERFAHREN UND SYSTEM ZUR FREIGABE EINER TECHNISCHEN VORRICHTUNG**
METHOD AND SYSTEM FOR ENABLING A TECHNICAL APPARATUS
PROCÉDÉ ET SYSTÈME PERMETTANT LA VALIDATION D'UN DISPOSITIF TECHNIQUE

(30) Priorität: 11.11.2011 DE 102011118234
(43) Veröffentlichungstag der Anmeldung: 17.09.2014
(73) Patentinhaber: Audi AG, 85045 Ingolstadt (DE)
(72) Erfinder: OPPERMANN, Nils, 85049 Ingolstadt (DE); GANSEN, Tobias, 85111 Pietenfeld (DE); LACHER, Peter, 85049 Ingolstadt (DE)
(74) Vertreter: Brandt, Kai
(86) Internationale Anmeldenummer: PCT/EP2012/004391
(87) Internationale Veröffentlichungsnummer: WO 2013/068074

(56) Entgegenhaltungen:
- WO-A2-2007/009453
- GB-A- 2 373 614
- JP-A- 2011 039 712

## Beschreibung

Die Erfindung betrifft ein Verfahren und System zur Freigabe einer technischen Vorrichtung.

Nach dem heutigen Stand der Technik ist es bekannt, dass als Ausweismittel zum Nachweis der Berechtigung zur Benutzung von und/oder zum Zugang zu technischen Vorrichtungen auch andere Mittel verwendet werden können, als die früher ausschließlich üblichen herkömmlichen Schlüssel.

So können heute auch Magnetkarten, Chipkarten, Smartcards und/oder Mobilfunkgeräte die Funktion eines "Schlüssels" übernehmen, mittels dessen sich ein Nutzer Zutritt zu einer technischen Vorrichtung verschaffen und/oder eine technische Vorrichtung in Benutzung nehmen kann, wobei diese neuen Ausweismittel entweder kumulativ, alternativ oder anstelle der früher üblichen Schlüssel verwendet werden. Auf derartigen Magnetkarten, Chipkarten, Smartcards und/oder Mobilfunkgeräten ist ein "Schlüssel" in Form eines Datensatzes gespeichert, der beispielsweise zu einer Empfangseinheit in einer technischen Vorrichtung übertragen und dort ausgewertet wird. Sofern die Auswertung ergibt, dass ein zugelassener und gültiger Schlüssel übertragen wurde, wird für einen Nutzer der Zugang zur und/oder die Benutzung der technischen Vorrichtung freigegeben.

Derartige neue Ausweismittel sind beispielsweise beschrieben in der EP 0 913 979 A2 und der DE 101 42 967 A1.

Nach dem heutigen Stand der Technik ist es ebenfalls möglich, dass zwischen einer technischen Vorrichtung, wie beispielsweise einem (Kraft)Fahrzeug, und einer externen Rechnereinheit eine sichere Verbindung, beispielsweise Internet-Verbindung, aufgebaut wird. Über eine solche sichere Verbindung ist es beispielsweise möglich, Zutritts- und/oder Nutzungsberechtigungen von einem oder mehreren Nutzern auf Authentizität hin zu überprüfen und gegebenenfalls Zutritts- und/oder Nutzungsberechtigungen zu erteilen oder zu verweigern.

Beispiele für derartige oder ähnliche Lösungen sind beschrieben in der DE 102 37 831 A1 und der WO 2007/009453 A2.

So beschreibt die WO 2007/009453 A2 ein Identifikations- und/oder Schließsystem zur Identifikation und/oder Freigabe eines technischen Systems, das mindestens eine steuernde Empfangseinheit umfasst, die in Abhängigkeit von einem empfangenen Signal mindestens eine Steuerfunktion ausführt, und das mindestens eine mobile Sendeeinheit umfasst, die zur Versendung eines Signals, das die steuernde Empfangseinheit zur Ausführung der Steuerfunktion veranlasst, geeignet ist, wobei die steuernde Empfangseinheit über Mittel verfügt, um zu prüfen, ob ein empfangenes Signal die Ausführung einer Steuerfunktion auslösen soll, und die mobile Sendeeinheit über Mittel verfügt, die eine Festlegung, Änderung und Speicherung des an die steuernde Empfangseinheit zu versendenden Signals ermöglichen. Ein solches System ermöglicht insbesondere die digitale Übertragung sowie die zeitliche Begrenzung von Schlüsseln.

Und aus der WO 2011/053357 A1 ist eine Zugangssteuerung für ein Fahrzeug bekannt, bei der eine Fahrzeugreservierung von einer drahtlosen Kommunikationsvorrichtung empfangen, die Fahrzeugreservierung authentifiziert und der Zugang zum Fahrzeug nach Authentifizierung der Fahrzeugreservierung zur Verfügung gestellt wird. Das System für eine Zugangssteuerung für ein Fahrzeug weist eine Fahrzeugzugangssteuerungskomponente auf, die dazu eingerichtet ist, den Zugang zu einem Fahrzeug zur Verfügung zu stellen, und eine Kommunikationsschnittstelle zur Kommunikation mit einer drahtlosen Kommunikationsvorrichtung. Zugang zu dem Fahrzeug wird zur Verfügung gestellt, wenn eine Fahrzeugreservierung von der drahtlosen Kommunikationsvorrichtung empfangen wird.

Bei einem Teil der bisher bekannten Lösungen wird bei Verwendung eines solchen "neuen Schlüssels" durch einen Nutzer auf eine Überprüfung der Gültigkeit des verwendeten Schlüssels und/oder auf eine Überprüfung im Hinblick die Authentifizierung und/oder Autorisierung des den Schlüssel verwendenden Nutzers verzichtet, was unter Sicherheitsgesichtspunkten jedoch in vielen Fällen nicht akzeptabel ist.

Bei Lösungen nach dem Stand der Technik, die eine derartige Überprüfung vorschlagen, werden entweder nicht ausreichend sichere technische Lösungen und/oder Verfahren verwendet, oder es kann eine Überprüfung nur stattfinden, sobald und solange eine Verbindung von der technischen Vorrichtung zu einer externen Überprüfungseinrichtung existiert. Hat in einem solchen Fall die technische Vorrichtung keine Verbindung zur externen Überprüfungseinrichtung, kann auch keine Prüfung der Berechtigung auf ihre Gültigkeit hin vorgenommen werden, und die technische Vorrichtung kann von einem berechtigten Nutzer z.B. nicht in Benutzung genommen werden.

Auf eine Onlineprüfung kann bei den aus dem Stand der Technik bekannten Lösungen aber nicht ohne Weiteres verzichtet werden, da die Sicherheit der Berechtigung anderenfalls nicht ausreichend wäre. Wenn ein "neuer Schlüssel" auf mobilen Endgeräten, wie z.B. Handys, Smartphones, und PDAs gespeichert ist, ergeben sich zusätzliche Sicherheitsprobleme aufgrund der grundsätzlich gegebenen Manipulierbarkeit dieser Endgeräte.

Eine sichere und zuverlässige Verwaltung von derartigen neuen Schlüsseln für eine technische Vorrichtung ist jedoch insbesondere in den Fällen erforderlich, bei denen wiederholt zeitlich beschränkt gültige Schlüssel bzw. Reservierungen für deren Zugang und/oder Verwendung erstellt werden sollen, wie dies beispielsweise bei Flottenfahrzeugen von Unternehmen, dem Fuhrpark von Car-Sharing-Unternehmen oder bei Autoverleihfirmen der Fall ist.

Es ist daher Aufgabe der vorliegenden Erfindung, ein Verfahren und ein System zur Verfügung zu stellen, mit dem die Nachteile des Stands der Technik überwunden werden. Diese Aufgabe wird gelöst durch das Verfahren gemäß Anspruch 1 und das System gemäß Anspruch 12. Vorteilhafte Weiterbildungen der Erfindung sind Gegenstand der Unteransprüche.

Erfindungsgemäß wird ein Verfahren zur Datenübertragung zwischen einer eine Empfangseinheit, eine Übertragungseinheit und eine Rechnereinheit aufweisende technischen Vorrichtung, einer eine Empfangseinheit, eine Übertragungseinheit und eine Rechnereinheit aufweisenden externen Einrichtung, und einem eine Empfangseinheit, eine Übertragungseinheit und eine Speichereinheit aufweisenden mobilen Endgerät vorgeschlagen, wobei das Verfahren die folgenden Schritte umfasst:
(a) Übertragen einer Reservierungs-Anfrage eines Nutzers durch die Übertragungseinheit des mobilen Endgeräts an die Empfangseinheit der externen Einrichtung und Weiterleiten der Reservierungs-Anfrage an die Rechnereinheit der externen Einrichtung;
(b) Prüfen der Reservierungs-Anfrage durch die Rechnereinheit der externen Einrichtung in Bezug auf Authentifizierung und Autorisierung des Nutzers sowie Verfügbarkeit der technischen Vorrichtung;
(c) Erzeugen eines Datensatzes durch die Rechnereinheit der externen Einrichtung, wobei der Datensatz Reservierungsinformationen sowie Informationen zur Authentifizierung und Autorisierung des Nutzers enthält, und Verschlüsseln des Datensatzes mit einem vorrichtungsspezifischen Passwort durch die Rechnereinheit der externen Einrichtung derart, dass der verschlüsselte Datensatz durch das mobile Endgerät nicht gelesen und/oder entschlüsselt werden kann;
(d) Weiterleiten des verschlüsselten Datensatzes an die Übertragungseinheit der externen Einrichtung, Übertragen des verschlüsselten Datensatzes durch die Übertragungseinheit der externen Rechnereinheit an die Empfangseinheit des mobilen Endgeräts und Speichern des verschlüsselten Datensatzes in der Speichereinheit des mobilen Endgeräts;
(e) Übertragen des verschlüsselten Datensatzes durch den Nutzer mittels der Übertragungseinheit des mobilen Endgeräts an die Empfangseinheit der technischen Vorrichtung, Weiterleiten des verschlüsselten Datensatzes an die Rechnereinheit der technischen Vorrichtung;
(f-1) Entschlüsseln und Auswerten des Datensatzes durch die Rechnereinheit der technischen Vorrichtung;
(g) Erzeugen einer Authentifizierungsanfrage durch die Rechnereinheit der technischen Vorrichtung, Weiterleiten der Authentifizierungsanfrage an die Übertragungseinheit der technischen Vorrichtung und Übertragen der Authentifizierungsanfrage durch die Übertragungseinheit der technischen Vorrichtung an die Empfangseinheit des mobilen Endgeräts
(h) Übertragen einer Authentifizierungsantwort durch den Nutzer an die Empfangseinheit der technischen Vorrichtung, Weiterleiten an und Auswerten der Authentifizierungsantwort durch die Rechnereinheit der technischen Vorrichtung;
(i) Freigeben der technischen Vorrichtung durch die Rechnereinheit der technischen Vorrichtung;

Durch das erfindungsgemäße Verfahren können registrierte, authentifizierte Nutzer über ein mobiles Endgerät eine Reservierung für eine technische Vorrichtung, beispielsweise ein Fahrzeug vornehmen. Hierzu kann sich der Nutzer beispielsweise einer Eingabeeinheit bedienen (Tasten, berührungsempfindlicher Bildschirm, Sprachsteuerung), die das mobile Endgerät aufweist. Sofern die technische Vorrichtung für den angefragten Zeitraum verfügbar ist und durch eine Überprüfung der Nutzerdaten die erforderliche Autorisierung und Authentizität des Nutzers festgestellt wurde, erstellt die Rechnereinheit der externen Einrichtung eine Reservierungsbestätigung zusammen mit Daten, die Informationen zur Authentifizierung und Autorisierung des Nutzers enthalten, und verschlüsselt diesen bevorzugt digitalen Datensatz mit einem vorrichtungsspezifischen Passwort. Im nachfolgenden wird dieser verschlüsselte Datensatz gelegentlich auch als Reservierungstoken bezeichnet. Diesen verschlüsselten Datensatz erhält der Nutzer auf sein mobiles Endgerät übertragen.

Der verschlüsselte Datensatz enthält alle Informationen zur Reservierung, z.B. Reservierungszeitraum, sowie die zur Authentifizierung und Autorisierung des Nutzers notwendige Information (z.B. eine Persönliche Identifizierungsnummer (PIN)).

Das mobile Endgerät kann den verschlüsselten Datensatz an die technische Vorrichtung übertragen, kann diesen verschlüsselten Datensatz aber selbst nicht lesen und/oder entschlüsseln. Hieraus ergibt sich als erster Vorteil, dass in Bezug auf eine mögliche Manipulierbarkeit des mobilen Endgeräts keine Sicherheitsbedenken bestehen.

Ein weiterer Vorteil in Bezug auf die Sicherheit ergibt sich daraus, dass der Datensatz mit einem vorrichtungsspezifischen Passwort verschlüsselt wird. Daher kann dieser Datensatz nur durch die zugehörige technische Vorrichtung entschlüsselt und ausgewertet werden.

Noch ein weiterer erfindungsgemäßer Vorteil ergibt sich dadurch, dass der verschlüsselte Datensatz Informationen zur Authentifizierung und Autorisierung des Nutzers enthält, die technische Vorrichtung also alle erforderlichen Informationen in Bezug auf eine korrekte Authentifizierungsantwort erhält. Nach einer entsprechenden Authentifizierungsanfrage durch die technische Vorrichtung muss sich der Nutzer gegenüber der technischen Vorrichtung mit einem eindeutigen Merkmal authentifizieren, um eine Freigabe der technischen Vorrichtung zu erreichen. Eine solche Authentifizierungsantwort kann beispielsweise aus einem eindeutigen Merkmal, wie beispielsweise einer PIN bestehen.

Durch den Umstand, dass der verschlüsselte Datensatz Informationen zur Authentifizierung und Autorisierung des Nutzers enthält, ist erfindungsgemäß eine Authentifizierung des Nutzers möglich, ohne dass eine Online-Verbindung von der technischen Vorrichtung zur externen Einrichtung erforderlich wäre.

Ein weiterer Vorteil ergibt sich daraus, dass der verschlüsselte Datensatz Informationen über eine zeitabhängige Gültigkeit der Reservierung besitzt. Der Nutzer kann daher nur innerhalb eines gültigen Zeitfensters die technische Vorrichtung nutzen und/oder hat Zugang zu ihr. Des Weiteren kann der verschlüsselte Datensatz Informationen zum Umfang der eingeräumten Nutzung enthalten, beispielsweise wie viele Kilometer der Nutzer innerhalb des gültigen Zeitfensters mit einem Fahrzeug zurücklegen darf.

Gemäß einer vorteilhaften Weiterbildung der Erfindung umfasst das erfindungsgemäße Verfahren nach Schritt (f-1) optional die folgenden weiteren Schritte:
(f-2) Erzeugen einer Validierungsanfrage durch die Rechnereinheit der technischen Vorrichtung, Weiterleiten der Validierungsanfrage an die Übertragungseinheit der technischen Vorrichtung, Übertragen der Validierungsanfrage durch die Übertragungseinheit der technischen Vorrichtung an die Empfangseinheit der externen Einrichtung, Weiterleiten an und Auswerten der Validierungsanfrage durch die Rechnereinheit der externen Einrichtung;
(f-3) Erzeugen einer Validierungsantwort durch die Rechnereinheit der externen Einrichtung, Weiterleiten der Validierungsantwort an die Übertragungseinheit der externen Einrichtung, Übertragen der Validierungsantwort durch die Übertragungseinheit der externen Einrichtung an die Empfangseinheit der technischen Vorrichtung, Weiterleiten an und Auswerten der Validierungsantwort durch die Rechnereinheit der technischen Vorrichtung.

Wie bereits oben erwähnt, ist es ein Vorteil des erfindungsgemäßen Verfahrens, dass zur Autorisierung und Authentifizierung eines Nutzers gegenüber der technischen Vorrichtung keine Verbindung zwischen der technischen Vorrichtung und der externen Einrichtung erforderlich ist. Sofern jedoch eine Verbindung zwischen der technischen Vorrichtung und der externen Einrichtung besteht bzw. herstellbar ist, kann erfindungsgemäß eine solche Verbindung in vorteilhafter Weise dazu verwendet werden, zur weiteren Erhöhung der Sicherheit von der technischen Vorrichtung eine Validierungsanfrage an die externe Einrichtung zu senden und eine Validierungsantwort durch die Einrichtung an die technischen Vorrichtung zu übertragen.

Gemäß einer weiteren Weiterbildung der Erfindung kann das im erfindungsgemäßen Verfahren verwendete mobile Endgerät ein Mobilfunkgerät, insbesondere ein Mobiltelefon, PDA (Personal Digital Assistant), ein SmartPhone oder ein ähnliches mobiles Gerät sein. Über ein derartiges Gerät verfügt mittlerweile die überwiegende Mehrheit der Bevölkerung. Auch besitzen derartige Geräte eine Empfangseinheit, eine Übertragungseinheit und Speichereinheit. Gegebenenfalls muss für das erfindungsgemäße Verfahren eine entsprechende Applikation auf dem mobilen Endgerät installiert werden, damit dieses für das erfindungsgemäße Verfahren verwendbar ist. Eine derartige Applikation kann beispielsweise eine JAVA-Applikation oder eine betriebssystemspezifische Applikation (z.B. für Android, Symbian, Bada, Windows Mobile) sein. Auch weisen derartige mobile Endgeräte in aller Regel auch eine für das erfindungsgemäße Verfahren oftmals nützliche Eingabeeinheit (Tastatur, berührungsempfindlicher Bildschirm, Sprachsteuerung) auf.

Das Übertragen der Reservierungs-Anfrage von der Übertragungseinheit des mobilen Endgeräts zu der Empfangseinheit der externen Einrichtung, das Übertragen des verschlüsselten Datensatzes von Übertragungseinheit der externen Einrichtung zu der Empfangseinheit des mobilen Endgeräts, das Übertragen der Validierungsanfrage durch die Übertragungseinheit der technischen Vorrichtung an die Empfangseinheit der externen Einrichtung, und/oder das Übertragen der Validierungsantwort durch die Übertragungseinheit der externen Einrichtung an die Empfangseinheit der technischen Vorrichtung erfolgt bevorzugt mittels einer Funkverbindung, insbesondere einer drahtlosen Weitstreckenverbindung oder einer WLAN-Verbindung.

Bei einer drahtlosen Weitstreckenverbindung kann beispielsweise eine digitale Mobilfunkverbindung nach dem GSM-Standard oder einer der später hinzugekommenen Erweiterungen für eine schnellere Datenübertragung verwendet werden.

Selbstverständlich ist es aber auch möglich, die oben erwähnten Übertragungen drahtgebunden durchzuführen. So können beispielsweise das mobile Endgerät und/oder die technische Vorrichtung mittels einer drahtgebundenen Datenverbindung (z.B. USB-Kabel, LAN-Kabel) oder einer Steckerverbindung unmittelbar oder mittelbar mit der externen Einrichtung verbunden werden.

Gemäß einer weiteren Weiterbildung der vorliegenden Erfindung erfolgen das Übertragen der Reservierungs-Anfrage von der Übertragungseinheit des mobilen Endgeräts zu der Empfangseinheit der externen Einrichtung, das Übertragen des verschlüsselten Datensatzes von Übertragungseinheit der externen Einrichtung zu der Empfangseinheit des mobilen Endgeräts, das Übertragen der Validierungsanfrage durch die Übertragungseinheit der technischen Einrichtung an die Empfangseinheit der externen Einrichtung, und/oder das Übertragen der Validierungsantwort durch die Übertragungseinheit der externen Einrichtung an die Empfangseinheit der technischen Vorrichtung unter Verwendung eines Netzwerkprotokolls, insbesondere eines Internetprotokolls.

Die überwiegende Mehrzahl der heute verwendeten Mobiltelefone, PDAs, SmartPhones oder ähnlicher mobiler Geräte kann eine Verbindung mit dem Internet aufbauen. Gleiches gilt bereits für viele technische Vorrichtungen, wie z.B. moderne Automobile. Daher kann das erfindungsgemäße Verfahren in vorteilhafter Weise auch unter Verwendung des Internets oder zumindest unter Verwendung eines Internetprotokolls durchgeführt werden. Das erfindungsgemäße Verfahren kann selbstverständlich auch unter Verwendung eines anderen geeigneten Netzwerkstandards und/oder einer anderen geeigneten Netzwerkarchitektur durchgeführt werden.

Gemäß einer weiteren Weiterbildung der Erfindung ist vorgesehen, dass das Übertragen des verschlüsselten Datensatzes von der Übertragungseinheit des mobilen Endgeräts zu der Empfangseinheit der technischen Vorrichtung, das Übertragen der Authentifizierungsanfrage von der Übertragungseinheit der technischen Vorrichtung zur Empfangseinheit des mobilen Endgeräts und/oder das Übertragen der Authentifizierungsantwort durch die Übertragungseinheit des mobilen Endgeräts zur Empfangseinheit der technischen Vorrichtung mittels einer Funkverbindung, per Ultraschall oder einer Infrarot-Verbindung erfolgen.

Diese Weiterbildung ermöglicht für den Nutzer eine bequeme Übertragung zwischen seinem mobilen Endgerät und der technischen Vorrichtung, da z.B. keine drahtgebundene Verbindung oder eine Verbindung mittels einer Steckerverbindung erforderlich ist. Als Funkverbindungstechnik können beispielsweise Bluetooth oder Near Field Communication verwendet werden. Selbstverständlich können die genannten Übertragungen auch drahtgebunden, mittels einer Steckerverbindung oder auf sonstige Weise durchgeführt werden. Beispielsweise ist es möglich, dass der Vorgang der Authentifizierungsanfrage und Authentifizierungsantwort mittels eines Lesegeräts und einer Identifizierungskarte durchgeführt wird. Auf der Identifizierungskarte können die erforderlichen Daten z.B. mittels eines Chips, eines Magnetstreifens oder in einer optoelektronisch lesbaren codierter Form gespeichert sein, und diese werden von dem Lesegerät ausgelesen und dann in geeigneter Weise ausgewertet.

Zur Einhaltung eines möglichst hohen Sicherheitsstandards sollten erfindungsgemäß zumindest einer der Übertragungsvorgänge verschlüsselt erfolgen, noch bevorzugter sollten alle Übertragungsvorgänge verschlüsselt erfolgen. Hierdurch wird - insbesondere bei drahtlosen Übertragungswegen - verhindert, dass Dritte die in unverschlüsselten Daten enthaltenen Informationen ohne Weiteres auslesen können.

Zur Erhöhung der Sicherheit des erfindungsgemäßen Verfahrens kann weiter vorgesehen sein, dass nur jeweils ein Datensatz, der Reservierungsinformationen sowie Informationen zur Authentifizierung und Autorisierung des Nutzers enthält, in der Speichereinheit der technischen Vorrichtung gespeichert ist. Hierdurch wird sichergestellt, dass nur jeweils ein Nutzer Zugang zu der technischen Vorrichtung hat und/oder diese nutzen kann. Wird ein neuer Datensatz in der Speichereinheit der technischen Vorrichtung gespeichert, verliert der vorherige Datensatz automatisch seine Gültigkeit.

Diese Weiterbildung der Erfindung kann beispielsweise auch dazu genutzt werden, eine noch bestehende Zugangs- und Nutzungsberechtigung zu überschreiben (z.B. bei vorzeitigem Ablauf der Berechtigung des Nutzers) und damit ungültig zu machen. Dieses Überschreiben kann beispielsweise unter Zuhilfenahme eines mobilen Endgeräts oder auch der externen Einrichtung erfolgen.

Gemäß einer Weiterbildung der Erfindung können über die Empfangseinheit, die Übertragungseinheit, die Rechnereinheit und die Speichereinheit der technischen Vorrichtung, und die Empfangseinheit, Übertragungseinheit und Rechnereinheit der externen Einrichtung auch Daten bezüglich des Zustands von Komponenten der technischen Einrichtung, des Standorts der technischen Einrichtung und/oder abrechnungsrelevante Daten empfangen und/oder übertragen werden.

Hierdurch ergibt sich eine vorteilhafte Weiterbildung des erfindungsgemäßen Verfahrens dahin, dass eine weiter erhöhte Sicherheit erzielt wird und/oder weitere Dienste angeboten werden können.

Die vorliegende Erfindung umfasst auch ein System umfassend eine Empfangseinheit, eine Übertragungseinheit und eine Rechnereinheit aufweisende technische Vorrichtung, eine eine Empfangseinheit, eine Übertragungseinheit und eine Rechnereinheit aufweisende externe Einrichtung, und ein eine Empfangseinheit, eine Übertragungseinheit und eine Speichereinheit aufweisendes mobiles Endgerät, wobei das System über Mittel zur Durchführung der Verfahrensschritte verfügt:
(a) Übertragen einer Reservierungs-Anfrage eines Nutzers durch die Übertragungseinheit des mobilen Endgeräts an die Empfangseinheit der externen Einrichtung und Weiterleiten der Reservierungs-Anfrage an die Rechnereinheit der externen Einrichtung;
(b) Prüfen der Reservierungs-Anfrage durch die Rechnereinheit der externen Einrichtung in Bezug auf Authentifizierung und Autorisierung des Nutzers sowie Verfügbarkeit der technischen Vorrichtung;
(c) Erzeugen eines Datensatzes durch die Rechnereinheit der externen Einrichtung, wobei der Datensatz Reservierungsinformationen sowie Informationen zur Authentifizierung und Autorisierung des Nutzers enthält, und Verschlüsseln des Datensatzes mit einem vorrichtungsspezifischen Passwort durch die Rechnereinheit der externen Einrichtung derart, dass der verschlüsselte Datensatz durch das mobile Endgerät nicht gelesen und/oder entschlüsselt werden kann;
(d) Weiterleiten des verschlüsselten Datensatzes an die Übertragungseinheit der externen Einrichtung, Übertragen des verschlüsselten Datensatzes durch die Übertragungseinheit der externen Rechnereinheit an die Empfangseinheit des mobilen Endgeräts und Speichern des verschlüsselten Datensatzes in der Speichereinheit des mobilen Endgeräts;
(e) Übertragen des verschlüsselten Datensatzes durch den Nutzer mittels der Übertragungseinheit des mobilen Endgeräts an die Empfangseinheit der technischen Vorrichtung, Weiterleiten des verschlüsselten Datensatzes an die Rechnereinheit der technischen Vorrichtung;
(f-1) Entschlüsseln und Auswerten des Datensatzes durch die Rechnereinheit der technischen Vorrichtung;
(g) Erzeugen einer Authentifizierungsanfrage durch die Rechnereinheit der technischen Vorrichtung, Weiterleiten der Authentifizierungsanfrage an die Übertragungseinheit der technischen Vorrichtung und Übertragen der Authentifizierungsanfrage durch die Übertragungseinheit der technischen Vorrichtung an die Empfangseinheit des mobilen Endgeräts;
(h) Übertragen einer Authentifizierungsantwort durch den Nutzer an die Empfangseinheit der technischen Vorrichtung, Weiterleiten an und Auswerten der Authentifizierungsantwort durch die Rechnereinheit der technischen Vorrichtung;
(i) Freigeben der technischen Vorrichtung durch die Rechnereinheit der technischen Vorrichtung.

Ebenso umfasst die vorliegende Erfindung das oben angegebene System, das weiter über Mittel zur Durchführung der Verfahren gemäß einem der Ansprüche 2 bis 11 verfügt.

Die "technische Vorrichtung" kann erfindungsgemäß jede für das erfindungsgemäße Verfahren geeignete Vorrichtung sein. Das erfindungsgemäße Verfahren und System eignen sich beispielsweise für ein Fahrzeug, bevorzugt ein Flottenfahrzeug, wie es in den Fuhrparks von Unternehmen, Car-Sharing-Unternehmen oder Autovermietungen verwendet wird. Bei derartigen Fahrzeugen erfolgt eine rasch wechselnde Reservierung durch verschiedene Nutzer, so dass hier das erfindungsgemäße Verfahren und System besonders vorteilhaft verwendet werden können.

Die "technische Vorrichtung" ist im Sinne dieser Erfindung jedoch nicht auf Fahrzeuge beschränkt. Beispielsweise kann im Sinne dieser Erfindung eine "technische Vorrichtung" auch ein Hotelzimmer oder ein Gästehaus sein, wobei mittels des erfindungsgemäßen Verfahrens und Systems ein zeitlich beschränkter Zugang zu dem Hotelzimmer oder Gästehaus für einen Nutzer ermöglicht wird. Ein weiteres Beispiel für eine "technische Vorrichtung" im Sinne dieser Erfindung ist eine stationär installierte oder auch mobile Maschine.

Bei einer Freigabe der technischen Vorrichtung durch die Rechnereinheit der technischen Vorrichtung kann es erforderlich sein, dass ein Ansteuern eines Steuergeräts (z.B. Ent- oder Verriegelung von Türen, eine Freigabe oder Sperrung des Zündschlosses, eine Freigabe oder Sperrung einer Lenkradsperre, eine Freigabe oder Sperrung einer Wegfahrsperre und/oder eine Freigabe oder Sperrung eines Motorsteuergerätes) erfolgt. In diesem Fall enthält die technische Vorrichtung selbstverständlich das oder die erforderliche(n) Steuergerät(e).

Bei einer Freigabe einer technischen Vorrichtung zur Nutzung durch einen Nutzer wird dem Nutzer eine gegebenenfalls zeitlich, örtlich und umfangsmäßig beschränkte Nutzung der technischen Vorrichtung ermöglicht. Ein Nutzer kann so beispielsweise ein freigegebenes Fahrzeug innerhalb eines gültigen Zeitfensters nutzen, oder hat für einen bestimmten Zeitraum Zugang zu einem Hotelzimmer.

Zur Verbesserung der Sicherheit kann es weiter vorgesehen sein, dass mindestens eine der Übertragungen bidirektional aufgebaut wird und/oder dass die Daten der Reservierungsanfrage durch das mobile Endgerät einen Code enthalten, der zur Authentifizierung des mobilen Endgeräts verwendet werden kann.

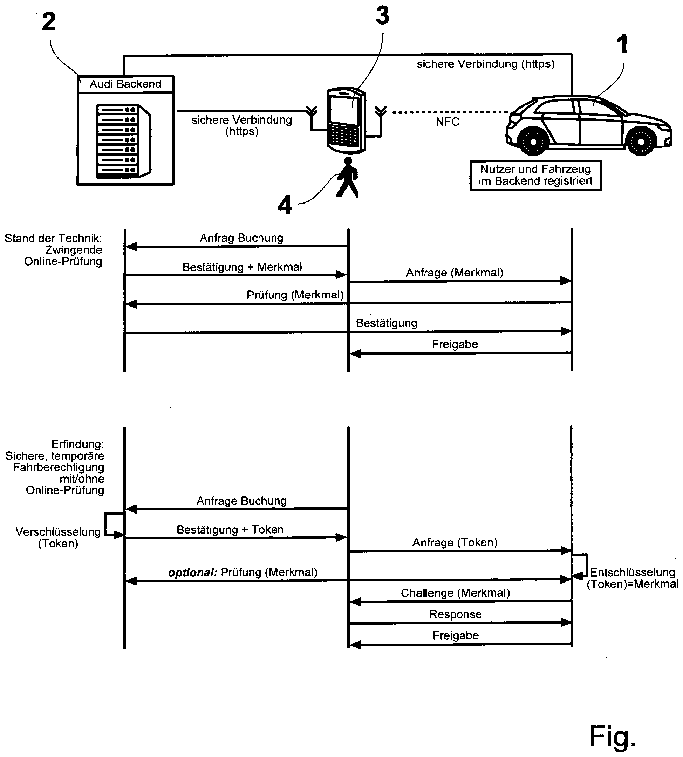

Im Folgenden wird die Erfindung anhand eines Ausführungsbeispiels mit Bezug auf die Zeichnung näher erläutert. Dieses Ausführungsbeispiel dient lediglich zur weiteren Veranschaulichung der Erfindung, nicht jedoch zu ihrer Beschränkung. Es zeigt die einzige Figur eine schematische Darstellung eines Verfahrens nach dem Stand der Technik sowie ein erfindungsgemäßes Verfahren zur Erteilung einer sicheren temporären Fahrberechtigung für ein Fahrzeug mit und ohne Online-Prüfung.

Im oberen Bereich der Figur ist links eine mit "Audi Backend" bezeichnete externe Einrichtung dargestellt. Ein solches Backend enthält zumindest eine Rechnereinheit, eine Empfangs- und eine Übertragungseinheit. Zur Verwaltung von verschiedenen technischen Vorrichtungen und zum Verwalten von verschiedenen temporären Fahrberechtigungen enthält das Backend bevorzugt auch noch eine Speichereinrichtung oder hat Schreib- und Lese-Zugriff auf eine solche Speichereinrichtung.

Auf dem mobilen Endgerät ist im gezeigten Beispiel eine geeignete Applikation gespeichert, mit der zumindest die Kommunikation mit dem Backend ermöglicht wird. Erforderlichenfalls ermöglicht diese Applikation oder eine weitere Applikation auf dem mobilen Endgerät die Kommunikation mit dem Fahrzeug.

Sowohl der Nutzer als auch das Fahrzeug sind in dem Backend registriert.

Das Fahrzeug und das mobile Endgerät verfügen im gezeigten Ausführungsbeispiel über eine Empfangs- und Übertragungseinrichtung nach dem NFC-Standard.

Bei dem Verfahren nach dem Stand der Technik ("Zwingende Online Prüfung"), überträgt der Nutzer mittels des mobilen Endgeräts eine Buchungsanfrage an das Backend ("Anfrage Buchung"). Sofern das Fahrzeug verfügbar ist und der Nutzer als registrierter Nutzer identifiziert wird, überträgt das Backend eine Buchungsbestätigung an das mobile Endgerät ("Bestätigung+Merkmal").

Danach überträgt der Nutzer unter Verwendung des mobilen Endgeräts mittels NFC die Buchungsbestätigung zusammen mit einem für ihn eindeutigen Identifizierungs-Merkmal an das Fahrzeug ("Anfrage (Merkmal)"). Das Fahrzeug überträgt daraufhin eine Anfrage zur Überprüfung des eindeutigen Identifizierungs-Merkmals an das Backend ("Prüfung (Merkmal)").

Sofern das eindeutige Identifizierungs-Merkmal mit dem gespeicherten übereinstimmt, übermittelt das Backend eine Bestätigung der Anfrage an das Fahrzeug ("Bestätigung"). Dieses überträgt daraufhin die Freigabemitteilung an das mobile Endgerät und gibt das Fahrzeug zur Nutzung frei ("Freigabe").

Bei diesem Verfahren nach dem Stand der Technik ist somit stets zwingend eine Online Prüfung des Identifizierungs-Merkmals des Benutzers erforderlich. Ohne eine Verbindung zwischen Backend und Fahrzeug kann keine Freigabe erfolgen.

Bei einem erfindungsgemäßen Verfahren ("Sichere temporäre Fahrberechtigung mit/ohne Online-Prüfung"), überträgt der Nutzer als ersten Schritt ebenfalls mittels des mobilen Endgeräts eine Buchungsanfrage an das Backend ("Anfrage Buchung"). Sofern das Fahrzeug verfügbar ist und der Nutzer als registrierter Nutzer identifiziert wird, erzeugt und überträgt das Backend eine verschlüsselte Buchungsbestätigung (Reservierungstoken), an das mobile Endgerät ("Verschlüsselung (Token)" und "Bestätigung+Token").

Der Nutzer überträgt im gezeigten Ausführungsbeispiel unter Verwendung des mobilen Endgeräts mittels NFC diese Buchungsbestätigung an das Fahrzeug ("Anfrage (Token)"). Das Fahrzeug entschlüsselt die Buchungsbestätigung und den Reservierungstoken ("Entschlüsselung (Token) = Merkmal") und überträgt eine Anfrage zur Eingabe eines eindeutigen Identifizierungs-Merkmals an das mobile Endgerät ("Challenge (Merkmal)").

Die Anfrage wird auf dem mobilen Endgerät gegebenenfalls nach einer erforderlichen Auswertung durch im mobilen Endgerät vorhandene geeignete Mittel (z.B. eine Applikation und eine Rechnereinheit) dem Nutzer signalisiert. Danach überträgt der Nutzer ein eindeutiges Identifizierungs-Merkmal an das Fahrzeug ("Response"). Stimmt das eindeutige Identifizierungs-Merkmal mit dem im Reservierungstoken gespeicherten überein, wird das Fahrzeug zur Nutzung freigegeben und gegebenenfalls eine Freigabebenachrichtigung an das mobile Endgerät übertragen und dort signalisiert ("Freigabe").

Lediglich optional kann vom Fahrzeug zur Prüfung des im Reservierungstoken gespeicherten eindeutigen Identifizierungs-Merkmals eine Validierungsanfrage an das Backend übertragen und von dort eine Bestätigung an das Fahrzeug übertragen werden (*"optional*: Prüfung (Merkmal)").

Beim erfindungsgemäßen Verfahren und System ist somit eine Online-Prüfung nicht zwingend erforderlich und es kann eine Überprüfung der Autorisierung und Authentifizierung des Nutzers und eine Freigabe des Fahrzeugs auch dann erfolgen, wenn das Fahrzeug keine Verbindung zu dem Backend aufnehmen kann. Mit dem erfindungsgemäßen Verfahren und System kann somit ein sicherer, temporärer Fahrzeugschlüssel für z.B. ein Flottenfahrzeug mit und ohne Online-Prüfung erstellt und verwendet werden.

Nachfolgend sollen einige wichtige Kriterien des erfindungsgemäßen Verfahrens und Systems noch einmal zusammengefasst werden:
- Registrierte, authentifizierte Nutzer können z.B. über eine Applikation auf ihrem mobilen Endgerät (z.B. Mobilfunkgerät) eine Reservierung für eine technische Vorrichtung (z.B. Fahrzeug) vornehmen;
- Bei der Reservierung einer technischen Vorrichtung (z.B. Fahrzeug) beispielsweise mittels der Applikation erstellt das Backend einen Reservierungstoken und verschlüsselt diesen mit einem vorrichtungsspezifischen Passwort;
- Den verschlüsselten Reservierungstoken erhält der Nutzer auf sein mobiles Endgerät übertragen. Dieses kann den Reservierungstoken nicht lesen, ihn jedoch später an die technische Vorrichtung übertragen (z.B. per NFC);
- Die technische Vorrichtung kann den Reservierungstoken mit dem vorrichtungsspezifischen Passwort entschlüsseln und auswerten;
- Der Reservierungstoken enthält alle erforderlichen Informationen zur Reservierung (z.B. Reservierungszeitraum), sowie zur Authentifizierung und Autorisierung des Nutzers notwendige Informationen (z.B. PIN);
- Der Nutzer muss sich gegenüber der technischen Vorrichtung vor Zugang zu und/oder Nutzung der technischen Vorrichtung mit einem eindeutigen Merkmal (z.B. PIN) aus dem Reservierungstoken authentifizieren.

Das erfindungsgemäße Verfahren und System bietet somit insbesondere folgende Vorteile im Vergleich zum Stand der Technik:
- Ein mobiles Endgerät, wie ein Handy, Smartphone und PDA kann aus Nutzersicht als temporärer Schlüssel verwendet werden;
- Da das mobile Endgerät keinen Zugriff auf den Reservierungstoken hat, stellt das mobile Endgerät als potentiell unsichere Plattform keine Gefahr für die Systemsicherheit dar;
- Nur die zugehörige technische Vorrichtung kann den Reservierungstoken entschlüsseln;
- Durch die nutzerbezogene Information, die verschlüsselt im Reservierungstoken übertragen wird, kann die technische Vorrichtung den berechtigten Nutzer auch ohne Online-Prüfung authentifizieren;
- Das Handling von Nutzern, technischen Vorrichtungen und Reservierungen verläuft zentral in der externen Einrichtung (Backend);
- optional kann in der technischen Vorrichtung nur ein Reservierungstoken hinterlegt werden, so dass eine nachfolgende Reservierung den alten Reservierungstoken überschreiben und somit ungültig macht;
- optional kann eine Verbindung zwischen technischer Vorrichtung und externer Einrichtung (Backend) dazu verwendet werden, um die Sicherheit zu erhöhen und weitere Dienste (z.B. Kostenabrechnung, Zustandskontrolle) anzubieten.

## Patentansprüche

1. Verfahren zur Datenübertragung zwischen einer eine Empfangseinheit, eine Übertragungseinheit und eine Rechnereinheit aufweisenden technischen Vorrichtung (1), einem eine Empfangseinheit, eine Übertragungseinheit und eine Rechnereinheit aufweisenden Backend (2), und einem eine Empfangseinheit, eine Übertragungseinheit und eine Speichereinheit aufweisenden mobilen Endgerät (3), die folgenden Schritte umfassend:
(a) Übertragen einer Reservierungs-Anfrage eines Nutzers (4) durch die Übertragungseinheit des mobilen Endgeräts (3) an die Empfangseinheit des Backend (2) und Weiterleiten der Reservierungs-Anfrage an die Rechnereinheit des Backend (2);
(b) Prüfen der Reservierungs-Anfrage durch die Rechnereinheit des Backend (2) in Bezug auf Authentifizierung und Autorisierung des Nutzers (4) sowie Verfügbarkeit der technischen Vorrichtung (1);
(c) Erzeugen eines Datensatzes durch die Rechnereinheit des Backend (2), wobei der Datensatz Reservierungsinformationen enthält, und Verschlüsseln des Datensatzes; der in Schritt (c) erzeugte Datensatz auch Information zur Authentifizierung und Autorisierung des Nutzers in Form eines eindeutigen Identifizierungs-Merkmals enthält und mit einem vorrichtungsspezifischen Passwort durch die Rechnereinheit des Backend derart, dass der verschlüsselte Datensatz durch das mobile Endgerät nicht gelesen und/oder entschlüsselt werden kann
(d) Weiterleiten des verschlüsselten Datensatzes an die Übertragungseinheit des Backend (2), Übertragen des verschlüsselten Datensatzes durch die Übertragungseinheit des Backend (2) an die Empfangseinheit des mobilen Endgeräts (3) und Speichern des verschlüsselten Datensatzes in der Speichereinheit des mobilen Endgeräts (3);
(e) Übertragen des verschlüsselten Datensatzes durch den Nutzer (4) mittels der Übertragungseinheit des mobilen Endgeräts (3) an die Empfangseinheit der technischen Vorrichtung (1), Weiterleiten des verschlüsselten Datensatzes an die Rechnereinheit der technischen Vorrichtung (1);
(f-1) Entschlüsseln und Auswerten des Datensatzes durch die Rechnereinheit der technischen Vorrichtung (1); und
(i) Freigeben der technischen Vorrichtung (1) durch die Rechnereinheit der technischen Vorrichtung (1)
**dadurch gekennzeichnet, dass** nach Schritt (f-1)
(f-2) eine Validierungsanfrage zur Prüfung des in dem verschlüsselten Datensatz gespeicherten eindeutigen Identifizierungs-Merkmals durch die Rechnereinheit der technischen Vorrichtung (1) erzeugt wird, die Validierungsanfrage an die Übertragungseinheit der technischen Vorrichtung (1) weitergeleitet wird, die Validierungsanfrage durch die Übertragungseinheit der technischen Vorrichtung (1) an die Empfangseinheit des Backend (2) übertragen wird, die Validierungsanfrage weitergeleitet wird und ausgewertet wird durch die Rechnereinheit des Backend (2);
(f-3) eine Validierungsantwort durch die Rechnereinheit des Backend (2) erzeugt wird, die Validierungsantwort an die Übertragungseinheit des Backend (2) weitergeleitet wird, die Validierungsantwort durch die Übertragungseinheit des Backend (2) an die Empfangseinheit der technischen Vorrichtung (1) übertragen wird, die Validierungsantwort weitergeleitet wird an und ausgewertet wird durch die Rechnereinheit der technischen Vorrichtung (1);
(g) eine Authentifizierungsanfrage durch die Rechnereinheit der technischen Vorrichtung (1) erzeugt wird, die Authentifizierungsanfrage an die Übertragungseinheit der technischen Vorrichtung (1) weitergeleitet und die Authentifizierungsanfrage durch die Übertragungseinheit der technischen Vorrichtung (1) an die Empfangseinheit des mobilen Endgeräts (3) übertragen wird; und
(h) eine Authentifizierungsantwort durch den Nutzer (4) an die Empfangseinheit der technischen Vorrichtung (1) übertragen wird, mit der sich der Nutzer gegenüber der technischen Vorrichtung mit dem eindeutigen Identifizierungs-Merkmal authentifiziert, die Authentifizierungsantwort weitergeleitet wird an und ausgewertet wird durch die Rechnereinheit der technischen Vorrichtung (1);

2. Verfahren nach Anspruch 1, wobei das mobile Endgerät (3) ein Mobilfunkgerät, insbesondere ein Mobiltelefon, PDA (Personal Digital Assistant), ein SmartPhone oder ein ähnliches mobiles Gerät ist.

3. Verfahren nach Anspruch 1 oder 2, wobei das Übertragen der Reservierungs-Anfrage von der Übertragungseinheit des mobilen Endgeräts (3) zu der Empfangseinheit des Backend (2), das Übertragen des verschlüsselten Datensatzes von Übertragungseinheit des Backend (2) zu der Empfangseinheit des mobilen Endgeräts (3), das Übertragen der Validierungsanfrage durch die Übertragungseinheit der technischen Vorrichtung (1) an die Empfangseinheit des Backend (2), und/oder das Übertragen der Validierungsantwort durch die Übertragungseinheit des Backend (2) an die Empfangseinheit der technischen Vorrichtung (1) mittels einer Funkverbindung, insbesondere einer drahtlosen Weitstreckenverbindung oder einer WLAN-Verbindung erfolgen.

4. Verfahren nach einem der Ansprüche 1 bis 3, wobei das Übertragen der Reservierungs-Anfrage von der Übertragungseinheit des mobilen Endgeräts (3) zu der Empfangseinheit des Backend (2), das Übertragen des verschlüsselten Datensatzes von Übertragungseinheit des Backend (2) zu der Empfangseinheit des mobilen Endgeräts (3), das Übertragen der Validierungsanfrage durch die Übertragungseinheit der technischen Vorrichtung (1) an die Empfangseinheit des Backend (2), und/oder das Übertragen der Validierungsantwort durch die Übertragungseinheit des Backend (2) an die Empfangseinheit der technischen Vorrichtung (1) unter Verwendung des Internets oder unter Verwendung eines Internetprotokolls erfolgt.

5. Verfahren nach einem der Ansprüche 1 bis 4, wobei das Übertragen des verschlüsselten Datensatzes von der Übertragungseinheit des mobilen Endgeräts (3) zu der Empfangseinheit der technischen Vorrichtung (1), das Übertragen der Authentifizierungsanfrage von der Übertragungseinheit der technischen Vorrichtung (1) zur Empfangseinheit des mobilen Endgeräts (3) und/oder das Übertragen der Authentifizierungsantwort durch die Übertragungseinheit des mobilen Endgeräts (3) zur Empfangseinheit der technischen Vorrichtung (1) mittels einer Funkverbindung, per Ultraschall oder einer Infrarot-Verbindung erfolgen.

6. Verfahren nach Anspruch 5, wobei als Funkverbindungstechnik Bluetooth oder Near Field Communication verwendet wird.

7. Verfahren nach einem der Ansprüche 1 bis 6, wobei zumindest einer der Übertragungsvorgänge verschlüsselt erfolgt.

8. Verfahren nach einem der Ansprüche 1 bis 7, wobei alle Übertragungsvorgänge verschlüsselt erfolgen.

9. Verfahren nach einem der Ansprüche 1 bis 8, wobei die technische Vorrichtung (1) weiter eine Speichereinrichtung aufweist und nur jeweils ein Datensatz, der Reservierungsinformationen sowie Informationen zur Authentifizierung und Autorisierung des Nutzers (4) enthält, in der Speichereinheit der technischen Vorrichtung (1) gespeichert ist.

10. Verfahren nach einem der Ansprüche 1 bis 9, wobei durch die technische Vorrichtung (1) und das Backend (2) Daten bezüglich des Zustands von Komponenten der technischen Vorrichtung (1), des Standorts der technischen Vorrichtung (1) und/oder abrechnungsrelevante Daten empfangen und/oder übertragen werden.

11. System umfassend eine Empfangseinheit, eine Übertragungseinheit und eine Rechnereinheit aufweisende technische Vorrichtung (1), ein eine Empfangseinheit, eine Übertragungseinheit und eine Rechnereinheit aufweisendes Backend (2), und ein eine Empfangseinheit, eine Übertragungseinheit und eine Speichereinheit aufweisendes mobiles Endgerät (3), wobei das System über Mittel zur Durchführung der Verfahrensschritte verfügt:
(a) Übertragen einer Reservierungs-Anfrage eines Nutzers (4) durch die Übertragungseinheit des mobilen Endgeräts (3) an die Empfangseinheit des Backend (2) und Weiterleiten der Reservierungs-Anfrage an die Rechnereinheit des Backend (2);
(b) Prüfen der Reservierungs-Anfrage durch die Rechnereinheit des Backend (2) in Bezug auf Authentifizierung und Autorisierung des Nutzers (4) sowie Verfügbarkeit der technischen Vorrichtung (1);
(c) Erzeugen eines Datensatzes durch die Rechnereinheit des Backend (2), wobei der Datensatz Reservierungsinformationen enthält, und Verschlüsseln des Datensatzes; der in Schritt (c) erzeugte Datensatz auch Information zur Authentifizierung und Autorisierung des Nutzers in Form eines eindeutigen Identifizierungs-Merkmals enthält und mit einem vorrichtungsspezifischen Passwort durch die Rechnereinheit des Backend derart, dass der verschlüsselte Datensatz durch das mobile Endgerät nicht gelesen und/oder entschlüsselt werden kann
(d) Weiterleiten des verschlüsselten Datensatzes an die Übertragungseinheit des Backend (2), Übertragen des verschlüsselten Datensatzes durch die Übertragungseinheit des Backend (2) an die Empfangseinheit des mobilen Endgeräts (3) und Speichern des verschlüsselten Datensatzes in der Speichereinheit des mobilen Endgeräts (3);
(e) Übertragen des verschlüsselten Datensatzes durch den Nutzer (4) mittels der Übertragungseinheit des mobilen Endgeräts (3) an die Empfangseinheit der technischen Vorrichtung (1), Weiterleiten des verschlüsselten Datensatzes an die Rechnereinheit der technischen Vorrichtung (1);
(f-1) Entschlüsseln und Auswerten des Datensatzes durch die Rechnereinheit der technischen Vorrichtung (1); und
(i) Freigeben der technischen Vorrichtung (1) durch die Rechnereinheit der technischen Vorrichtung (1).
**dadurch gekennzeichnet, dass** nach Schritt (f-1)
(f-2) eine Validierungsanfrage zur Prüfung des in dem verschlüsselten Datensatz gespeicherten eindeutigen Identifizierungs-Merkmals durch die Rechnereinheit der technischen Vorrichtung (1) erzeugt wird, die Validierungsanfrage an die Übertragungseinheit der technischen Vorrichtung (1) weitergeleitet wird, die Validierungsanfrage durch die Übertragungseinheit der technischen Vorrichtung (1) an die Empfangseinheit des Backend (2) übertragen wird, die Validierungsanfrage weitergeleitet wird und ausgewertet wird durch die Rechnereinheit des Backend (2);
(f-3) eine Validierungsantwort durch die Rechnereinheit des Backend (2) erzeugt wird, die Validierungsantwort an die Übertragungseinheit des Backend (2) weitergeleitet wird, die Validierungsantwort durch die Übertragungseinheit des Backend (2) an die Empfangseinheit der technischen Vorrichtung (1) übertragen wird, die Validierungsantwort weitergeleitet wird an und ausgewertet wird durch die Rechnereinheit der technischen Vorrichtung (1);
(g) eine Authentifizierungsanfrage durch die Rechnereinheit der technischen Vorrichtung (1) erzeugt wird, die Authentifizierungsanfrage an die Übertragungseinheit der technischen Vorrichtung (1) weitergeleitet und die Authentifizierungsanfrage durch die Übertragungseinheit der technischen Vorrichtung (1) an die Empfangseinheit des mobilen Endgeräts (3) übertragen wird; und
(h) eine Authentifizierungsantwort durch den Nutzer (4) an die Empfangseinheit der technischen Vorrichtung (1), übertragen wird, mit der sich der Nutzer gegenüber der technischen Vorrichtung mit dem eindeutigen Identifizierungs-Merkmal authentifiziert, die Authentifizierungsantwort weitergeleitet wird an und ausgewertet wird durch die Rechnereinheit der technischen Vorrichtung (1).

12. System nach Anspruch 11, das weiter über Mittel zur Durchführung der Verfahren gemäß einem der Ansprüche 2 bis 10 verfügt.

13. Verfahren nach einem der Ansprüche 1 bis 10, wobei die technische Vorrichtung (1) ein Fahrzeug, ein Flottenfahrzeug, eine Maschine, ein Gebäude oder Raum ist.

14. System nach Anspruch 11 oder 12, wobei die technische Vorrichtung (1) ein Fahrzeug, ein Flottenfahrzeug, eine Maschine, ein Gebäude oder Raum ist.

## Claims

1. Method for transmitting data between a technical device (1), which has a receiving unit, a transmission unit and a processor unit, a backend (2), which has a receiving unit, a transmission unit and a processor unit, and a mobile terminal (3) which has a receiving unit, a transmission unit and a storage unit comprising the following steps:
(a) transmitting a reservation request of a user (4) by means of the transmission unit of the mobile terminal (3) to the receiving unit of the backend (2) and forwarding the reservation request to the processor unit of the backend (2);
(b) verifying the reservation request by means of the processor unit of the backend (2) with respect to authentication and authorisation of the user (4) and availability of the technical device (1);
(c) producing a data set by the processor unit of the backend (2), wherein the data set contains reservation information, and encrypting the data set; the data set produced in step (c) also contains information for authentication and authorisation of the user in the form of a unique identification feature, and with a device-specific password by the processor unit of the backend in such a manner that the encrypted data set cannot be read and/or decrypted by the mobile terminal;
(d) forwarding the encrypted data set to the transmission unit of the backend (2), transmitting the encrypted data set by the transmission unit of the backend (2) to the receiving unit of the mobile terminal (3) and storing the encrypted data set in the storage unit of the mobile terminal (3);
(e) transmitting the encrypted data set by the user (4) by means of the transmission unit of the mobile terminal (3) to the receiving unit of the technical device (1), forwarding the encrypted data set to the processor unit of the technical device (1);
(f-1) decrypting and evaluating the data set by the processor unit of the technical device (1); and
(i) releasing the technical device (1) by the processor unit of the technical device (1),
**characterised in that**,
after step (f-1),
(f-2) a validation request for verification of the unique identification feature which is stored in the encrypted data set is produced by the processor unit of the technical device (1), the validation request is forwarded to the transmission unit of the technical device (1), the validation request is transmitted by the transmission unit of the technical device (1) to the receiving unit of the backend (2), the validation request is forwarded and evaluated by the processor unit of the backend (2);
(f-3) a validation response is produced by the processor unit of the backend (2), the validation response is forwarded to the transmission unit of the backend (2), the validation response is transmitted by the transmission unit of the backend (2) to the receiving unit of the technical device (1), the validation response is forwarded to and evaluated by the processor unit of the technical device (1);
(g) an authentication request is produced by the processor unit of the technical device (1), the authentication request is forwarded to the transmission unit of the technical device (1) and the authentication request is transmitted by the transmission unit of the technical device (1) to the receiving unit of the mobile terminal (3); and
(h) there is transmitted by the user (4) to the receiving unit of the technical device (1) an authentication response by means of which the user is authenticated with respect to the technical device with the unique identification feature, the authentication response is forwarded to and evaluated by the processor unit of the technical device (1).

2. Method according to claim 1, wherein the mobile terminal (3) is a mobile radio device, in particular a mobile telephone, PDA (Personal Digital Assistant), a SmartPhone or a similar mobile device.

3. Method according to claim 1 or 2, wherein the transmission of the reservation request from the transmission unit of the mobile terminal (3) to the receiving unit of the backend (2), the transmission of the encrypted data set from the transmission unit of the backend (2) to the receiving unit of the mobile terminal (3), the transmission of the validation request by the transmission unit of the technical device (1) to the receiving unit of the backend (2), and/or the transmission of the validation response by the transmission unit of the backend (2) to the receiving unit of the technical device (1) are carried out by means of a radio connection, in particular a wireless long-distance connection or a WLAN connection.

4. Method according to any one of claims 1 to 3, wherein the transmission of the reservation request from the transmission unit of the mobile terminal (3) to the receiving unit of the backend (2), the transmission of the encrypted data set from the transmission unit of the backend (2) to the receiving unit of the mobile terminal (3), the transmission of the validation request by the transmission unit of the technical device (1) to the receiving unit of the backend (2), and/or the transmission of the validation response by the transmission unit of the backend (2) to the receiving unit of the technical device (1) is carried out using the internet or using an internet protocol.

5. Method according to any one of claims 1 to 4, wherein the transmission of the encrypted data set from the transmission unit of the mobile terminal (3) to the receiving unit of the technical device (1), the transmission of the authentication request from the transmission unit of the technical device (1) to the receiving unit of the mobile terminal (3) and/or the transmission of the authentication response by the transmission unit of the mobile terminal (3) to the receiving unit of the technical device (1) are carried out by means of a radio connection, by means of ultrasound or an infrared connection.

6. Method according to claim 5, wherein Bluetooth or Near Field Communication is used as a radio communication technique.

7. Method according to any one of claims 1 to 6, wherein at least one of the transmission operations is carried out in an encrypted manner.

8. Method according to any one of claims 1 to 7, wherein all the transmission operations are carried out in an encrypted manner.

9. Method according to any one of claims 1 to 8, wherein the technical device (1) further has a storage device and in each case only one data set which contains reservation information and information for authentication and authorisation of the user (4) is stored in the storage unit of the technical device (1).

10. Method according to any one of claims 1 to 9, wherein data relating to the state of components of the technical device (1), the location of the technical device (1) and/or billing-relevant data are received and/or transmitted by the technical device (1) and the backend (2).

11. System comprising a technical device (1) which has a receiving unit, a transmission unit and a processor unit, a backend (2) which has a receiving unit, a transmission unit and a processor unit, and a mobile terminal (3) which has a receiving unit, a transmission unit and a storage unit, wherein the system has means for carrying out the method steps:
(a) transmitting a reservation request of a user (4) by means of the transmission unit of the mobile terminal (3) to the receiving unit of the backend (2) and forwarding the reservation request to the processor unit of the backend (2);
(b) verifying the reservation request by means of the processor unit of the backend (2) with respect to authentication and authorisation of the user (4) and availability of the technical device (1);
(c) producing a data set by the processor unit of the backend (2), wherein the data set contains reservation information and encrypting the data set; the data set produced in step (c) also contains information for authentication and authorisation of the user in the form of a unique identification feature and with a device-specific password by the processor unit of the backend in such a manner that the encrypted data set cannot be read and/or decrypted by the mobile terminal;
(d) forwarding the encrypted data set to the transmission unit of the backend (2), transmitting the encrypted data set by the transmission unit of the backend (2) to the receiving unit of the mobile terminal (3) and storing the encrypted data set in the storage unit of the mobile terminal (3);
(e) transmitting the encrypted data set by the user (4) by means of the transmission unit of the mobile terminal (3) to the receiving unit of the technical device (1), forwarding the encrypted data set to the processor unit of the technical device (1);
(f-1) decrypting and evaluating the data set by the processor unit of the technical device (1); and
(i) releasing the technical device (1) by the processor unit of the technical device (1),
**characterised in that**,
after step (f-1),
(f-2) a validation request for verification of the unique identification feature which is stored in the encrypted data set is produced by the processor unit of the technical device (1), the validation request is forwarded to the transmission unit of the technical device (1), the validation request is transmitted by the transmission unit of the technical device (1) to the receiving unit of the backend (2), the validation request is forwarded and evaluated by the processor unit of the backend (2);
(f-3) a validation response is produced by the processor unit of the backend (2), the validation response is forwarded to the transmission unit of the backend (2), the validation response is transmitted by the transmission unit of the backend (2) to the receiving unit of the technical device (1), the validation response is forwarded to and evaluated by the processor unit of the technical device (1);
(g) an authentication request is produced by the processor unit of the technical device (1), the authentication request is forwarded to the transmission unit of the technical device (1) and the authentication request is transmitted by the transmission unit of the technical device (1) to the receiving unit of the mobile terminal (3); and
(h) there is transmitted by the user (4) to the receiving unit of the technical device (1) an authentication response by means of which the user is authenticated with respect to the technical device with the unique identification feature, the authentication response is forwarded to and evaluated by the processor unit of the technical device (1).

12. System according to claim 11 which further has means for carrying out the methods according to any one of claims 2 to 10.

13. Method according to any one of claims 1 to 10, wherein the technical device (1) is a vehicle, a fleet vehicle, a machine, a building or a room.

14. System according to claim 11 or 12, wherein the technical device (1) is a vehicle, a fleet vehicle, a machine, a building or a room.

## Revendications

1. Procédé pour la transmission de données entre un dispositif technique (1), comportant une unité de réception, une unité de transmission et une unité de calcul, un serveur en arrière-plan (2), comportant une unité de réception, une unité de transmission et une unité de calcul, et un terminal mobile (3), comportant une unité de réception, une unité de transmission et une unité de mémoire, comprenant les étapes suivantes :
(a) transmission d'une demande de réservation d'un utilisateur (4) par l'unité de transmission du terminal mobile (3) à l'unité de réception du serveur en arrière-plan (2) et transfert de la demande de réservation à l'unité de calcul de l'arrière-plan (2) ;
(b) vérification de la demande de réservation par l'unité de calcul du serveur en arrière-plan (2) quant à l'authentification et à l'autorisation de l'utilisateur (4) ainsi que quant à la disponibilité du dispositif technique (1) ;
(c) production d'un ensemble de données par l'unité de calcul du serveur en arrière-plan (2), lequel ensemble de données contient des informations de réservation, et cryptage de l'ensemble de données avec un mot de passe spécifique au dispositif par l'unité de calcul du serveur en arrière-plan de telle sorte que l'ensemble de données crypté ne peut pas être lu et/ou décrypté par le terminal mobile, l'ensemble de données produit à l'étape (c) contenant aussi des informations destinées à l'authentification et à l'autorisation de l'utilisateur sous la forme d'une caractéristique d'identification unique ;
(d) transfert de l'ensemble de données crypté à l'unité de transmission du serveur en arrière-plan (2), transmission de l'ensemble de données crypté par l'unité de transmission du serveur en arrière-plan (2) à l'unité de réception du terminal mobile (3) et mémorisation de l'ensemble de données crypté dans l'unité de mémoire du terminal mobile (3) ;
(e) transmission de l'ensemble de données crypté par l'utilisateur (4) au moyen de l'unité de transmission du terminal mobile (3) à l'unité de réception du dispositif technique (1), transfert de l'ensemble de données crypté à l'unité de calcul du dispositif technique (1) ;
(f-1) décryptage et évaluation de l'ensemble de données par l'unité de calcul du dispositif technique (1) ; et
(i) déblocage du dispositif technique (1) par l'unité de calcul du dispositif technique (1) ;
**caractérisé en ce que**
après l'étape (f-1),
(f-2) une demande de validation destinée à vérifier la caractéristique d'identification unique mémorisée dans l'ensemble de données crypté est produite par l'unité de calcul du dispositif technique (1), la demande de validation est transférée à l'unité de transmission du dispositif technique (1), la demande de validation est transmise par l'unité de transmission du dispositif technique (1) à l'unité de réception du serveur en arrière-plan (2), la demande de validation est transférée et évaluée par l'unité de calcul du serveur en arrière-plan (2) ;
(f-3) une réponse de validation est produite par l'unité de calcul du serveur en arrière-plan (2), la réponse de validation est transférée à l'unité de transmission du serveur en arrière-plan (2), la réponse de validation est transmise par l'unité de transmission du serveur en arrière-plan (2) à l'unité de réception du dispositif technique (1), la réponse de validation est transférée et évaluée par l'unité de calcul du dispositif technique (1) ;
(g) une demande d'authentification est produite par l'unité de calcul du dispositif technique (1), la demande d'authentification est transférée à l'unité de transmission du dispositif technique (1) et la demande d'authentification est transmise par l'unité de transmission du dispositif technique (1) à l'unité de réception du terminal mobile (3) ; et
(h) une réponse d'authentification est transmise par l'utilisateur (4) à l'unité de réception du dispositif technique (1), réponse d'authentification avec laquelle l'utilisateur s'identifie auprès du dispositif technique avec la caractéristique d'identification unique, la réponse d'authentification est transférée et évaluée par l'unité de calcul du dispositif technique (1).

2. Procédé selon la revendication 1, dans lequel le terminal mobile (3) est un appareil de radiocommunication mobile, en particulier un téléphone mobile, un assistant numérique personnel (PDA, Personal Digital Assistant), un téléphone intelligent (SmartPhone) ou un appareil mobile analogue.

3. Procédé selon la revendication 1 ou 2, dans lequel la transmission de la demande de réservation par l'unité de transmission du terminal mobile (3) à l'unité de réception du serveur en arrière-plan (2), la transmission de l'ensemble de données crypté par l'unité de transmission du serveur en arrière-plan (2) à l'unité de réception du terminal mobile (3), la transmission de la demande de validation par l'unité de transmission du dispositif technique (1) à l'unité de réception du serveur en arrière-plan (2), et/ou la transmission de la réponse de validation par l'unité de transmission du serveur en arrière-plan (2) à l'unité de réception du dispositif technique (1) s'effectuent au moyen d'une liaison radio, en particulier une liaison sans fil à longue portée ou une liaison WLAN.

4. Procédé selon l'une des revendications 1 à 3, dans lequel la transmission de la demande de réservation par l'unité de transmission du terminal mobile (3) à l'unité de réception du serveur en arrière-plan (2), la transmission de l'ensemble de données crypté par l'unité de transmission du serveur en arrière-plan (2) à l'unité de réception du terminal mobile (3), la transmission de la demande de validation par l'unité de transmission du dispositif technique (1) à l'unité de réception du serveur en arrière-plan (2), et/ou la transmission de la réponse de validation par l'unité de transmission du serveur en arrière-plan (2) à l'unité de réception du dispositif technique (1) s'effectuent en utilisant l'internet ou en utilisant un protocole internet.

5. Procédé selon l'une des revendications 1 à 4, dans lequel la transmission de l'ensemble de données crypté par l'unité de transmission du terminal mobile (3) à l'unité de réception du dispositif technique (1), la transmission de la demande d'authentification par l'unité de transmission du dispositif technique (1) à l'unité de réception du terminal mobile (3) et/ou la transmission de la réponse d'authentification par l'unité de transmission du terminal mobile (3) à l'unité de réception du dispositif technique (1) s'effectuent au moyen d'une liaison radio, par ultrasons ou par une liaison infrarouge.

6. Procédé selon la revendication 5, dans lequel la technologie Bluetooth ou la communication en champ proche est utilisée comme technologie de liaison radio.

7. Procédé selon l'une des revendications 1 à 6, dans lequel au moins l'une des opérations de transmission s'effectue de manière cryptée.

8. Procédé selon l'une des revendications 1 à 7, dans lequel toutes les opérations de transmission s'effectuent de manière cryptée.

9. Procédé selon l'une des revendications 1 à 8, dans lequel le dispositif technique (1) comporte en outre un dispositif de mémoire et dans lequel, à chaque fois, un seul ensemble de données qui contient des informations de réservation ainsi que des informations destinées à l'authentification et à l'autorisation de l'utilisateur (4) est mémorisé dans l'unité de mémoire du dispositif technique (1).

10. Procédé selon l'une des revendications 1 à 9, dans lequel des données concernant l'état de composants du dispositif technique (1), la localisation du dispositif technique (1) et/ou des données pertinentes pour la facturation sont reçues et/ou transmises par le dispositif technique (1) et par le serveur en arrière-plan (2).

11. Système comprenant un dispositif technique (1), comportant une unité de réception, une unité de transmission et une unité de calcul, un serveur en arrière-plan (2), comportant une unité de réception, une unité de transmission et une unité de calcul, et un terminal mobile (3), comportant une unité de réception, une unité de transmission et une unité de mémoire, lequel système dispose de moyens destinés à mettre en oeuvre les étapes de procédé suivantes :
(a) transmission d'une demande de réservation d'un utilisateur (4) par l'unité de transmission du terminal mobile (3) à l'unité de réception du serveur en arrière-plan (2) et transfert de la demande de réservation à l'unité de calcul de l'arrière-plan (2) ;
(b) vérification de la demande de réservation par l'unité de calcul du serveur en arrière-plan (2) quant à l'authentification et à l'autorisation de l'utilisateur (4) ainsi que quant à la disponibilité du dispositif technique (1) ;
(c) production d'un ensemble de données par l'unité de calcul du serveur en arrière-plan (2), lequel ensemble de données contient des informations de réservation, et cryptage de l'ensemble de données avec un mot de passe spécifique au dispositif par l'unité de calcul du serveur en arrière-plan de telle sorte que l'ensemble de données crypté ne peut pas être lu et/ou décrypté par le terminal mobile, l'ensemble de données produit à l'étape (c) contenant aussi des informations destinées à l'authentification et à l'autorisation de l'utilisateur sous la forme d'une caractéristique d'identification unique ;
(d) transfert de l'ensemble de données crypté à l'unité de transmission du serveur en arrière-plan (2), transmission de l'ensemble de données crypté par l'unité de transmission du serveur en arrière-plan (2) à l'unité de réception du terminal mobile (3) et mémorisation de l'ensemble de données crypté dans l'unité de mémoire du terminal mobile (3) ;
(e) transmission de l'ensemble de données crypté par l'utilisateur (4) au moyen de l'unité de transmission du terminal mobile (3) à l'unité de réception du dispositif technique (1), transfert de l'ensemble de données crypté à l'unité de calcul du dispositif technique (1) ;
(f-1) décryptage et évaluation de l'ensemble de données par l'unité de calcul du dispositif technique (1) ; et
(i) déblocage du dispositif technique (1) par l'unité de calcul du dispositif technique (1) ;
**caractérisé en ce que**
après l'étape (f-1),
(f-2) une demande de validation destinée à vérifier la caractéristique d'identification unique mémorisée dans l'ensemble de données crypté est produite par l'unité de calcul du dispositif technique (1), la demande de validation est transférée à l'unité de transmission du dispositif technique (1), la demande de validation est transmise par l'unité de transmission du dispositif technique (1) à l'unité de réception du serveur en arrière-plan (2), la demande de validation est transférée et évaluée par l'unité de calcul du serveur en arrière-plan (2) ;
(f-3) une réponse de validation est produite par l'unité de calcul du serveur en arrière-plan (2), la réponse de validation est transférée à l'unité de transmission du serveur en arrière-plan (2), la réponse de validation est transmise par l'unité de transmission du serveur en arrière-plan (2) à l'unité de réception du dispositif technique (1), la réponse de validation est transférée et évaluée par l'unité de calcul du dispositif technique (1) ;
(g) une demande d'authentification est produite par l'unité de calcul du dispositif technique (1), la demande d'authentification est transférée à l'unité de transmission du dispositif technique (1) et la demande d'authentification est transmise par l'unité de transmission du dispositif technique (1) à l'unité de réception du terminal mobile (3) ; et
(h) une réponse d'authentification est transmise par l'utilisateur (4) à l'unité de réception du dispositif technique (1), réponse d'authentification avec laquelle l'utilisateur s'identifie auprès du dispositif technique avec la caractéristique d'identification unique, la réponse d'authentification est transférée et évaluée par l'unité de calcul du dispositif technique (1).

12. Système selon la revendication 11, qui dispose en outre de moyens destinés à mettre en oeuvre le procédé selon l'une des revendications 2 à 10.

13. Procédé selon l'une des revendications 1 à 10, dans lequel le dispositif technique (1) est un véhicule, un véhicule d'une flotte, une machine, un bâtiment ou une salle.

14. Système selon la revendication 11 ou 12, dans lequel le dispositif technique (1) est un véhicule, un véhicule d'une flotte, une machine, un bâtiment ou une salle.
